# EUROPÄISCHE PATENTANMELDUNG

(11) **EP 3 339 007 A1**
(43) Veröffentlichungstag der Anmeldung: **27.06.2018**
(21) Anmeldenummer: 18156942.7
(22) Anmeldetag: 22.12.2014
(51) Int. Cl.: B29C 70/68, B29D 24/00, B32B 38/08, B32B 37/10, B32B 38/00, B32B 37/14

(54) **VERFAHREN UND VORRICHTUNG ZUR HERSTELLUNG EINES SANDWICHBAUTEILS**

(62) Teilanmeldung aus: 14199862.5
(71) Anmelder: MAGNA STEYR Fahrzeugtechnik AG & Co KG, 8041 Graz (AT)
(72) Erfinder: WOLFSBERGER, Günter, 8501 Lieboch (AT)
(74) Vertreter: Zangger, Bernd

(57) **Zusammenfassung**

Verfahren zur Herstellung eines Sandwichbauteils gemäß den folgenden Schritten:
- Bereitstellen mehrerer Materialbahnen (1, 2, 3, 4),
- Aufbringen zumindest eines Matrixmaterials auf die Ober- und/oder Unterseite zumindest einer der Materialbahnen (1, 2, 3, 4), wobei auf zumindest zwei der Materialbahnen (1, 2, 3, 4) in unterschiedlicher Weise Matrixmaterial aufgebracht wird und/oder auf zumindest eine der Materialbahnen (1, 2, 3, 4) entlang deren Ober- und/oder Unterseite in unterschiedlicher Weise Matrixmaterial aufgebracht wird,
- wobei das Aufbringen des Matrixmaterials mittels Sprühauftrag über eine Sprüheinheit erfolgt,
- wobei das Aufbringen von Matrixmaterial in unterschiedlicher Weise durch Aufbringen einer unterschiedlichen Menge von Matrixmaterial erfolgt,
- Anordnen zumindest einer Kernschicht (24) auf einer der Materialbahnen (1, 2, 3, 4), und
- Verpressen der Materialbahnen (1, 2, 3, 4) und der Kernschicht (24) zu dem Sandwichbauteil, wobei die Kernschicht (24) zwischen zumindest zwei der Materialbahnen (1, 2, 3, 4) angeordnet ist und Vorrichtung zur Durchführung eines solchen Verfahrens.

## Beschreibung

### Gebiet der Erfindung

Die vorliegende Erfindung betrifft ein Verfahren zur Herstellung eines Sandwichbauteils und eine Vorrichtung zur Durchführung eben dieses Verfahrens.

### Stand der Technik

Unter einem Sandwichbauteil ist in der Regel ein Bauteil zu verstehen, das aus Schichten gleicher oder unterschiedlicher Werkstoffe zusammengesetzt ist. Im einfachsten Fall bestehen Sandwichbauteile aus zwei Deckschichten, einer oberen Deckschicht und einer unteren Deckschicht, sowie einer Kernschicht, die zwischen der oberen Deckschicht und der unteren Deckschicht angeordnet ist. Eine Verbindung zwischen den einzelnen Schichten erfolgt meist durch Verpressen mittels eines geeigneten Werkzeugs, wie zum Beispiel einer Presse.

Derartige Sandwichbauteile finden in vielen unterschiedlichen Branchen Anwendung. In den letzten Jahren ist ihre Bedeutung jedoch insbesondere als Strukturbauteil im Bereich des Automobil-Leichtbaus enorm gestiegen.

Der Stand der Technik offenbart eine Vielzahl von unterschiedlichen Ansätzen zur Herstellung von Strukturbauteilen.

In der DE 10 2012 222 376 A1 beispielsweise wird ein Verfahren für die Herstellung eines Sandwichbauteils für die Verwendung als Strukturbauteil eines Fahrzeugs beschrieben. Hierbei wird zuerst eine innere Deckschicht in einem Werkzeug angeordnet, auf der inneren Deckschicht wird eine zumindest abschnittsweise poröse Kernschicht angeordnet und wiederum darauf eine äußere Deckschicht. Nach beschriebener Anordnung der einzelnen Schichten wird ein Prozessdruck gegen die beiden Deckschichten und ein Kerndruck in der Kernschicht zum Druckausgleich gegen den Prozessdruck erzeugt. So wird die Kernschicht nicht durch einen zu hohen Prozessdruck belastet und muss in Bezug auf ihre Stabilität nicht überdimensioniert werden.

Die DE 10 2013 013 419 A1 offenbart ein kontinuierliches Fertigungsverfahren zur Herstellung sichtseitig verschiedenartiger Sandwichbauteile, eine Vorrichtung zur Herstellung des Sandwichbauteils und ein damit herstellbares Sandwichbauteil. Das in dieser Schrift vorgestellte Verfahren zur Herstellung des Sandwichbauteils umfasst ausgehend von einem Deckschicht-Kernlage-Deckschicht Stapel, wobei die Deckschichten aus thermoplastischen Fasermateriallagen bestehen, ein ersten Erwärm-Schritt der Sandwichanordnung, wobei die Sandwichanordnung solange erwärmt wird, bis das thermoplastische Material der Fasermateriallage zumindest zu fließen beginnt. Das Erwärmen erfolgt in einem Heizwerkzeug, zum Beispiel einer Heizpresse. Bei Verwendung der Heizpresse bewirkt der erzeugte Pressdruck ein Anhaften der thermoplastischen Fasermateriallagen an dem Wabenkern (Kernlage). Im nächsten Verfahrensschritt wird eine Dekorlage mit Schaumlage auf der erwärmten Sandwichanordnung so angeordnet, dass die Schaumlage zu der Deckschicht weist. Der zähflüssige Thermoplast der Deckschicht sorgt für Haftung der Schaumlage an der Sandwichanordnung. Danach wird die Oberfläche der Dekorlage mittels Formschablone der Oberflächenstruktur angepasst, die die fertige Sandwichanordnung haben sollte. Dazu werden eine oder mehrere Formschablone(n) an einer oder beiden Basisformoberflächen des Formpresswerkzeuges angeordnet. Den abschließenden Schritt des Verfahrens stellt die gekühlte Formpressung mittels einer Formpresse dar.

Ebenso beschreibt die DEP 1 897 680 A1 ein Verfahren zur Herstellung eines faserverstärkten Sandwichbauteils mit einem Wabenkern, wobei der Wabenkern nur einseitig mittels einer Deckschicht verschlossen ist, jedoch die Waben der Wabenschicht beidseitig verschlossen sind. Das Verfahren umfasst dabei die Schritte: -Herstellen eines Geleges umfassend den Wabenkern, sowie zumindest einseitig auf dem Wabenkern, von Innen nach Außen angeordnet, eine aushärtbare Klebeschicht, eine Sperrschicht und eine Faserschicht; - Einschließen des Geleges in einen gasdichten Raum; -Erzeugen eines Vakuums in diesem gasdichten Raum; Aus- bzw. Anhärten der Klebeschicht zwischen Wabenkern und Sperrschicht unter diesem Vakuum, so dass die Wabenzellen zumindest teilweise evakuiert sind bevor sie durch die Sperrschicht verschlossen werden; -nach dem Aus- bzw. Anhärten der Klebeschicht, Infusion der Faserschicht unter Vakuum mit einem Matrixmaterial, -Aushärten des Matrixmaterials unter Vakuum.

### Aufgabenstellung

Es ist eine Aufgabe der Erfindung ein alternatives Verfahren zur Herstellung eines Sandwichbauteils und eine Vorrichtung zur Durchführung eben dieses Verfahrens vorzuschlagen.

Diese Aufgabe wird durch ein Verfahren zur Herstellung eines Sandwichbauteils mit den Merkmalen gemäß Patentanspruch 1, sowie den in Patentanspruch 13 angeführten Merkmalen einer Vorrichtung zur Durchführung eben dieses Verfahrens gelöst. Vorteilhafte Ausgestaltungen der Erfindung sind den abhängigen Patentansprüchen zu entnehmen.

Das erfindungsgemäße Verfahren zur Herstellung eines Sandwichbauteils beinhaltet die folgenden Schritte:
- Bereitstellen mehrerer Materialbahnen,
- Aufbringen zumindest eines Matrixmaterials auf die Ober- und/oder Unterseite zumindest einer der Materialbahnen, wobei auf zumindest zwei der Materialbahnen in unterschiedlicher Weise Matrixmaterial aufgebracht wird und/oder auf zumindest eine der Materialbahnen entlang deren Ober-und/oder Unterseite in unterschiedlicher Weise Matrixmaterial aufgebracht wird,
- wobei das Aufbringen des Matrixmaterials mittels Sprühauftrag über eine Sprüheinheit erfolgt,
- wobei das Aufbringen von Matrixmaterial in unterschiedlicher Weise durch Aufbringen einer unterschiedlichen Menge von Matrixmaterial erfolgt,
- Anordnen zumindest einer Kernschicht auf einer der Materialbahnen, und
- Verpressen der Materialbahnen und der Kernschicht zu dem Sandwichbauteil, wobei die Kernschicht zwischen zumindest zwei der Materialbahnen angeordnet ist.

Das durch das erfindungsgemäße Verfahren hergestellte Sandwichbauteil ist im Wesentlichen aus mehreren, zumindest zwei, Schichten von Materialbahnen und zumindest einer Kernschicht aufgebaut. Die Kernschicht ist dabei zwischen zumindest zwei der Materialbahnen angeordnet.

Die Materialbahnen sind bevorzugt aus Fasermaterial gefertigt und im Vergleich zur Kernschicht vorzugsweise dünn gestaltet. Die dabei benutzen Fasern sind Naturfasern, wie beispielsweise Hanffasern, Bambusfasern, auf Zellulose basierende Fasern etc., und/oder organische sowie anorganische Chemiefasern, wie beispielsweise Polyamidfasern, Glasfasern, Kohlenstofffasern etc..

Das Fasermaterial ist somit bevorzugt aus Fasern aufgebaut, die zu Geweben, Vliesen, Gestricke, Matten, Gitter, etc. verarbeitet sind, wobei diese Gebilde bevorzugt in eine je nach Anforderung passende Grundmatrix zu sogenannten Verbundwerkstoffen weiterverarbeitet sind.

Die Materialbahnen (aus Fasermaterial) sind in einer vorteilhaften Ausführungsvariante des erfindungsgemäßen Verfahrens vorbehandelt, wobei dabei sämtliche dem Fachmann geläufige Arten der Vorbehandlung, wie beispielsweise Primern, Imprägnieren, Beschichten, etc., in Frage kommen.

Die verwendeten einzelnen Materialbahnen können sich voneinander in ihrer (Grund-) Zusammensetzung und Ausgestaltung unterscheiden.

Vorteilhafterweise sind die Materialbahnen für das Matrixmaterial durchlässig ausgebildet.

Die einzelnen Materialbahnen sind in einer optionalen Ausführungsvariante schichtartig ausgebildet, das heißt, dass sie aus zumindest zwei Einzelschichten aufgebaut sind, wobei zumindest eine der Einzelschichten ein Fasermaterial ist.

Einzelschichten, die aus Nicht-Fasermaterial bestehen, sind dabei vorteilhafterweise als Kunststoff-Folien ausgebildet.

Auf die bereitgestellten Materialbahnen wird zumindest ein Matrixmaterial auf die Ober- und/oder Unterseite zumindest einer der Materialbahnen aufgebracht, wobei auf zumindest zwei der Materialbahnen in unterschiedlicher Weise Matrixmaterial aufgebracht wird und/oder auf zumindest eine der Materialbahnen entlang deren Fläche in unterschiedlicher Weise Matrixmaterial aufgebracht wird.

Unter der Begrifflichkeit "in unterschiedlicher Weise" ist erfindungsgemäß das Aufbringen von Matrixmaterial durch Aufbringen einer unterschiedlichen Menge von Matrixmaterial auf die Materialbahnen zu verstehen.

Gemäß dem erfindungsgemäßen Verfahren wird das Matrixmaterial somit vorteilhafterweise homogen und/oder inhomogen auf eine oder mehrere Materialbahnen aufgetragen.

Das Matrixmaterial ist bevorzugt aus einem thermoplastischen und/oder duroplastischen Kunststoff.

Das Matrixmaterial ist bevorzugt ein Harz, besonders bevorzugt ein Kunstharz (z.B. Polyurethan).

Besonders bevorzugt ist das Matrixmaterial klebstoffartig ausgebildet und weist beispielsweise die Hauptkomponenten Harz und Härter auf.

Um die Matrixmaterial-Eigenschaften in Bezug auf diverse Anforderungen, wie beispielsweise Festigkeit oder Elastizität, zu beeinflussen sind dem Matrixmaterial vorteilhafterweise Zusatzkomponenten und/oder -materialien, wie beispielsweise Fasern, zugemischt.

Die Materialbahnen werden bevorzugt auf Halterollen gelagert und bei Bedarf mittels zumindest einer Abwickeleinheit von den Halterollen abgewickelt. Die Materialbahnen werden während des erfindungsgemäßen Verfahrens bevorzugt im Wesentlichen horizontal, parallel zueinander und übereinander und/oder im Wesentlichen vertikal nebeneinander und/oder in einem beliebigen Winkel zueinander geführt.

In einer optionalen Ausführungsvariante liegen die Materialbahnen bereits als vorkonfektionierte, der Kontur des Sandwichbauteils entsprechende, Einzel-Lagen vor.

Die Führung der Materialbahnen erfolgt vorzugsweise über eine in Richtung einer Presse bewegten Endlos-Montagelinie.

In einer bevorzugten Ausführungsform werden die Materialbahnen in Bezug auf ihren Anfang horizontal und/oder vertikal beabstandet in Richtung der Presse geführt.

Während des Zeitraums in dem die Materialbahnen von den Halterollen in Richtung der Presse geführt werden laufen die Schritte Aufbringen zumindest eines Matrixmaterials auf die Ober- und/oder Unterseite zumindest einer der Materialbahnen, wobei auf zumindest zwei der Materialbahnen in unterschiedlicher Weise Matrixmaterial aufgebracht wird und/oder auf zumindest eine der Materialbahnen entlang deren Fläche in unterschiedlicher Weise Matrixmaterial aufgebracht wird, Anordnen der Kernschicht auf zumindest eine der Materialbahnen und Verpressen der Materialbahnen und der Kernschicht in einer Presse, in im Wesentlichen eben dieser Reihenfolge ab.

Somit steht am Anfang des Verfahrens ein Aufbringen zumindest eines Matrixmaterials auf die Ober- und/oder Unterseite zumindest einer der Materialbahnen, wobei auf zumindest zwei der Materialbahnen in unterschiedlicher Weise Matrixmaterial aufgebracht wird und/oder auf zumindest eine der Materialbahnen entlang deren Fläche in unterschiedlicher Weise Matrixmaterial aufgebracht wird.

Erfindungsgemäß erfolgt das Aufbringen des Matrixmaterials bevorzugt an der Ober- oder Unterseite der Materialbahnen, kann jedoch je nach Bedarf auch gleichzeitig an der Ober- und Unterseite der Materialbahnen erfolgen. Letzteres bedingt bei einem Aufbau aus mehreren Materialbahnen eine Zeitersparnis.

Das Aufbringen des Matrixmaterials auf die einzelnen Materialbahnen erfolgt dabei mittels Sprühauftrag.

Die Aufbringeinheit ist erfindungsgemäß eine Sprüheinheit, wobei die Sprüheinheit bevorzugt zumindest zwei Sprühköpfe aufweist, wodurch auf einfache Art und Weise Matrixmaterial verschiedener Eigenschaften, wie beispielweise Viskosität, Thixotrophie, Zusammensetzung etc., auf die Materialbahnen auftragen werden kann.

Dadurch lassen sich Sandwichbauteile mit partiell unterschiedlichen Eigenschaften in Bezug auf beispielsweise Zonensteifigkeit oder Oberflächenqualität erzeugen.

Weiters ist durch das individuelle (in verschiedener Weise) Aufbringen des Matrixmaterials auf die einzelnen Materialbahnen, sowie der Anpassung der Eigenschaften des Matrixmaterials (zum Beispiel Viskosität, Thixotropie, Menge) auf das jeweilige Material der Materialbahnen jeweils vergleichsweise nur ein dünner Matrix-Auftrag erforderlich, wodurch sich eine Gewichts- und Funktionsoptimierung ergibt.

In einer besonders bevorzugten Ausführungsform des erfindungsgemäßen Verfahrens wird auf zumindest einer der Materialbahnen zumindest eine Kernschicht angeordnet. Diese Kernschicht bewirkt bei dem fertiggestellten Bauteil beispielsweise eine vorteilhafte Versteifung eben dieses Sandwichbauteils.

Die Kernschicht ist vorteilhafterweise wabenartig ausgeführt. Andere Strukturierungen und Formen der Kernschicht, wie zum Beispiel eine wellenartige Ausbildung, sind jedoch nicht ausgeschlossen.

Die Kernschicht ist bevorzugt aus einem Leichtmaterial, wie beispielsweise einem Polymer (Schaumstoff, Kunststoff, Gummi, etc.), einem zellulose-basierten Material (Papier, Holz, Karton, etc.), einem Verbundwerkstoff oder auch einem Metall, ausgebildet.

In einer weiteren optionalen Ausführung ist die Kernschicht schichtartig ausgebildet - beispielsweise durch mehrere übereinander angeordnete Einzel-Kernschichten. Hierbei können die mindestens zwei Einzel-Kernschichten verschieden voneinander ausgebildet sein. Insbesondere können Wabenkerne mit unterschiedlicher Wabenform, Wabengröße, Wabenausrichtung, unterschiedlichen Steggeometrien und/oder Waben- und/oder Einzel-Kernschichtmaterial gestapelt und miteinander verbunden werden. Dies ist vor allem deshalb vorteilhaft, weil dadurch das spätere fertige Bauteil partiell mit unterschiedlichen Funktions- bzw. Bauteileigenschaften ausgestattet werden kann - einerseits soll das Bauteil eine bestimmte erforderliche Festigkeit und Steifigkeit aufweisen andererseits soll es aber an bestimmten Stellen weiche, leichter verformbare Zonen beinhalten, wie dies beispielsweise im Fahrzeugbereich zur Vermeidung von Verletzungen bei Kollisionen mit Fußgängern vorteilhaft ist.

Die Kernschicht ist vorzugsweise für das Matrixmaterial durchlässig, zumindest jedoch semidurchlässig, ausgebildet.

Die in Bezug auf ihren Anfang horizontal versetzten, parallel und übereinander geführten und/oder vertikal nebeneinander geführten Materialbahnen und die zumindest eine Kernschicht werden in dem erfindungsgemäßen Verfahren zu dem Sandwichbauteil verpresst. Das Verpressen erfolgt mittels einer Presse bevorzugt im Nasspressverfahren. Darunter ist ein Verpressen bei dem das aufgetragene Matrixmaterial noch nicht ausgehärtet ist zu verstehen.

In einer vorteilhaften Ausführungsform des erfindungsgemäßen Verfahrens erfolgt im Zuge des Verpressens der Materialbahnen und der Kernschicht zu einem Sandwichbauteil zudem eine Abtrennung des Sandwichbauteils von den unverpressten Materialbahnen. Dies bedingt den Vorteil, dass zwei Arbeitsschritte in einem Vorgang erfüllt werden und somit eine Zeitersparnis innerhalb des Verfahrens zur Herstellung des Sandwichbauteils erzielt wird.

Die erfindungsgemäße Vorrichtung zur Durchführung des zuvor beschriebenen Verfahrens zur Herstellung eines Sandwichbauteils umfasst im Wesentlichen folgendes:
- zumindest eine Abwickeleinheit zum Abwickeln von Materialbahnen von Halterollen,
- zumindest eine Aufbringeinheit zum Aufbringen zumindest eines Matrixmaterials auf die Ober- und/oder Unterseite zumindest einer der Materialbahnen, wobei auf zumindest zwei der Materialbahnen in unterschiedlicher Weise Matrixmaterial aufgebracht ist und/oder auf zumindest eine der Materialbahnen entlang deren Fläche in unterschiedlicher Weise Matrixmaterial aufgebracht ist,
- wobei die Aufbringeinheit eine Sprüheinheit ist,
- wobei das Aufbringen von Matrixmaterial in unterschiedlicher Weise durch Aufbringen einer unterschiedlichen Menge von Matrixmaterial erfolgt,
- zumindest eine erste Greifeinheit zum Anordnen zumindest einer Kernschicht auf zumindest einer der Materialbahnen
- zumindest eine Presse zum Verpressen der übereinander geführten Materialbahnen und der Kernschicht zu dem Sandwichbauteil.

Die Aufbringeinheit ist dabei erfindungsgemäß eine Sprüheinheit.

In einer vorteilhaften Ausführungsform der erfindungsgemäßen Vorrichtung weist die Presse zum Verpressen der Materialbahnen und der Kernschicht im Bereich einer oberen Pressplatte und/oder im Bereich einer unteren Pressplatte eine Schneidevorrichtung auf. Durch die Anordnung der Schneidvorrichtung im Bereich der oberen Pressplatte und/oder der unteren Pressplatte wird ein gleichzeitiges Verpressen der Materialbahnen und der Kernschicht zu einem Sandwichbauteil und ein Abtrennen eben dieses erzielt. So werden zwei Arbeitsschritte in einem Vorgang vereint.

Die Presse kann auch heizbar ausgeführt sein.

Bevorzugt weist die erfindungsgemäße Vorrichtung zudem zumindest eine Abwickeleinheit und unter Umständen auch eine Endlos-Montagelinie auf, mittels derer die Materialbahnen im Wesentlichen horizontal parallel zueinander und übereinander und/oder im Wesentlichen vertikal nebeneinander in Richtung der Presse geführt sind.

In einer besonders bevorzugten Variante der erfindungsgemäßen Vorrichtung sind die Halterollen der Materialbahnen voneinander horizontal und/oder vertikal beabstandet angeordnet. Dadurch wird es möglich die Materialbahnen in Bezug auf ihren Anfang horizontal und/oder vertikal beabstandet in Richtung der Presse zu führen.

Mittels der zumindest einen Aufbringeinheit wird zumindest ein Matrixmaterial eines Matrixmaterials auf die Ober- und/oder Unterseite zumindest einer der Materialbahnen aufgebracht, wobei auf zumindest zwei der Materialbahnen in unterschiedlicher Weise Matrixmaterial aufgebracht ist und/oder auf zumindest eine der Materialbahnen entlang deren Fläche in unterschiedlicher Weise Matrixmaterial aufgebracht ist.

Besonders bevorzugt ist die Aufbringeinheit eine Sprüheinheit mit zumindest einem zweiten Sprühkopf, wobei der zweite Sprühkopf vorzugsweise Matrixmaterial in unterschiedlicher Weise durch Aufbringen einer unterschiedlichen Menge und/oder unterschiedlichen Art von Matrixmaterial aufbringt.

### Kurzbeschreibung der Zeichnungen

Die Erfindung wird im Folgenden beispielhaft unter Bezugnahme auf die Zeichnungen beschrieben.
- Fig. 1: zeigt eine schematische Darstellung einer erfindungsgemäßen Vorrichtung zur Durchführung des erfindungsgemäßen Verfahrens zur Herstellung eines Sandwichbauteils von der Seite
- Fig. 2: zeigt eine schematische Darstellung einer erfindungsgemäßen Vorrichtung zur Durchführung des erfindungsgemäßen Verfahrens zur Herstellung eines Sandwichbauteils von oben

### Detaillierte Beschreibung der Erfindung

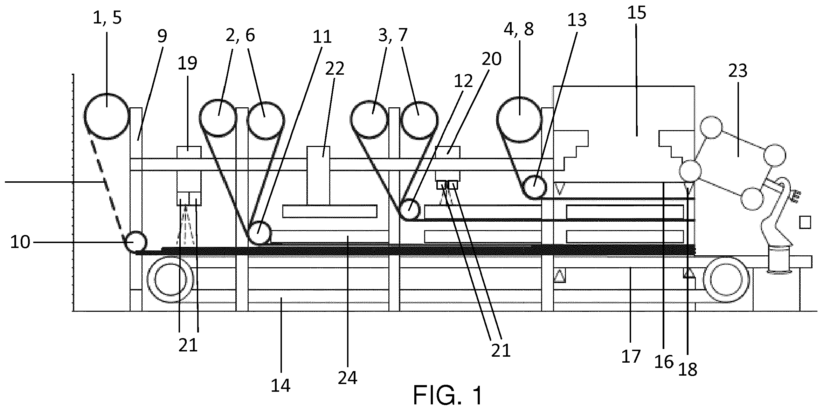

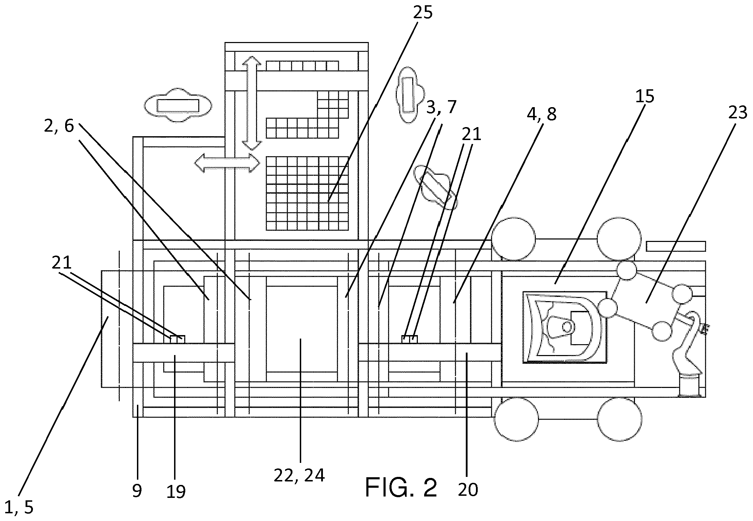

Fig. 1 und Fig. 2 zeigen schematische Darstellungen einer möglichen Ausführungsvariante der erfindungsgemäßen Vorrichtung zur Durchführung des erfindungsgemäßen Verfahrens zur Herstellung eines Sandwichbauteils aus unterschiedlichen Perspektiven - von der Seite (Fig. 1) und von oben (Fig. 2).

Fig. 1 zeigt eine Seitenansicht einer möglichen Aufbauvariante der erfindungsgemäßen Vorrichtung zur Durchführung des erfindungsgemäßen Verfahrens mit sechs Halterollen 5, 6, 7, 8 für vier Materialbahnen 1, 2, 3, 4, vier Abwickeleinheiten 10, 11, 12, 13, einer Endlos-Endlos-Montagelinie 14, zwei Aufbringeinheiten 19, 20, zwei Greifeinheiten 22, 23 und einer Presse 15 mit Schneidevorrichtung 18.

Die Endlos-Endlos-Montagelinie 14 führt eine Bewegung in horizontaler Richtung zur Presse 15 aus.

Mittels der in Fig. 1 beispielhaft gezeigten Vorrichtung ist nach dem erfindungsgemäßen Verfahren ein Sandwichbauteil mit einer Kernschicht 24 und vier Materialbahnen 1, 2, 3, 4 - einer ersten Materialbahn 1, einer zweiten Materialbahn 2, einer dritten Materialbahn 3 und einer vierten Materialbahn 4 - herstellbar, wobei in diesem Ausführungsbeispiel die zweite Materialbahn 2 und die dritte Materialbahn 3 doppellagig ausgeführt sind.

Die Werkstoffe der einzelnen Materialbahnen 1, 2, 3, 4 können gleich sein, oder sich unterscheiden.

Als Halterung für die Halterollen der Materialbahnen 5, 6, 7, 8 dient in der vorliegenden Aufbauvariante ein käfigartiges Gestell 9 über/um der/die Vorrichtung. Die Halterollen der Materialbahnen 5, 6, 7, 8 sind voneinander horizontal beabstandet über der jeweiligen Abwickeleinheit 10, 11, 12, 13 und der Endlos-Montagelinie 14 angeordnet.

Der ersten Materialbahn 1 ist eine erste Abwickeleinheit 10, der zweiten Materialbahn 2 eine zweite Abwickeleinheit 11, der dritten Materialbahn 3 eine dritte Abwickeleinheit 12 und der vierten Materialbahn 4 eine vierte Abwickeleinheit 13 zugeordnet. Die Abwickeleinheiten 10, 11, 12, 13 sind ebenso an dem käfigartigen Gestell 9 angeordnet.

Durch die horizontal versetzte Anordnung der Halterollen der Materialbahnen 5, 6, 7, 8 entlang der Vorrichtung wird es möglich die Materialbahnen 1, 2, 3, 4 in Bezug auf ihren Anfang horizontal beabstandet in Richtung einer Presse 15 zu führen und zwischen ihren Anfängen einzelne weitere Vorrichtungsbauteile, wie beispielsweise Aufbringeinheiten 19, 20 oder Greifeinheiten 22, anzuordnen.

Die erste Materialbahn 1 wird über eine erste Abwickeleinheit 10 horizontal über die Endlos-Montagelinie 14 geführt.

Die zweite Materialbahn 2 wird mittels der zweiten Abwickeleinheit 11 horizontal über der ersten Materialbahn 1 geführt. Die zweite Materialbahn 2 verläuft dabei im Wesentlichen parallel zur ersten Materialbahn 1.

Die dritte Materialbahn 3 wird mittels der dritten Abwickeleinheit 12 horizontal über der zweiten Materialbahn 2 geführt. Die dritte Materialbahn 3 verläuft dabei im Wesentlichen parallel zur ersten Materialbahn 1 und zur zweiten Materialbahn 2.

Die vierte Materialbahn 4 wird mittels der vierten Abwickeleinheit 13 horizontal über der dritten Materialbahn 3 geführt. Die vierte Materialbahn 4 verläuft dabei im Wesentlichen parallel zur ersten Materialbahn 1, zur zweiten Materialbahn 2 und zur dritten Materialbahn 3.

An dem käfigartigen Gestell 9 zwischen der Halterolle der ersten Materialbahn 5 und den beiden Halterollen der zweiten Materialbahn 6 (die zweite Materialbahn 2 ist doppellagig ausgeführt) ist eine erste Aufbringeinheit 19 angeordnet. Die erste Aufbringeinheit 19 ist als Sprüheinheit ausgeführt und weist zwei Sprühköpfe 21 auf. Je nach Bedarf ist nur ein Sprühköpf 21 oder beide Sprühköpfe 21 beim Aufbringen eines Matrixmaterials verwendbar. Diese erste Aufbringeinheit 19 bringt das Matrixmaterial auf die Oberseite der ersten Materiabahn 1 auf.

Über die mit Matrixmaterial benetzte erste Materialbahn 1 wird die zweite Materialbahn 2 geführt.

An dem käfigartigen Gestell 9 zwischen den beiden Halterollen der zweiten Materialbahn 6 und den beiden Halterollen der dritten Materialbahn 7 (die zweite Materialbahn 2 und die dritte Materialbahn 3 sind doppellagig ausgeführt) ist eine erste Greifeinheit 22 angeordnet. Die erste Greifeinheit 22 setzt eine Kernschicht 24 auf die Oberseite der zweiten Materialbahn 2 auf.

Über die Kernschicht 24 wird die dritte Materialbahn 3 geführt.

An dem käfigartigen Gestell 9 zwischen den beiden Halterollen der dritten Materialbahn 7 (die dritte Materialbahn 3 ist doppellagig ausgeführt) und der Halterolle der vierten Materialbahn 8 ist eine zweite Aufbringeinheit 20 angeordnet. Die zweite Aufbringeinheit 20 ist ebenso als Sprüheinheit ausgeführt und weist ebenso zwei Sprühköpfe 21 auf. Auch hier sind je nach Bedarf beide Sprühköpfe 21 beim Aufbringen des Matrixmaterials verwendbar, oder nur einer. Diese zweite Aufbringeinheit 20 bringt das Matrixmaterial auf die Oberseite der dritten Materiabahn 3 auf.

Über die mit Matrixmaterial benetzte dritte Materialbahn 3 wird die vierte Materialbahn 4 geführt.

Das nun vorliegende Sandwichbauteil umfasst folgende Schichten (von unten nach oben): Erste Materialbahn 1 - Matrixmaterial- zweite Materialbahn 2 - Kernschicht 24 - dritte Materialbahn 3 - Matrixmaterial- vierte Materialbahn 4.

Die vierte Materialbahn 4 bildet bei dem beispielhaften Vorrichtungsaufbau somit den Abschluss des Sandwichbauteils.

Über die Endlos-Montagelinie 14 wird das gestapelte Sandwichbauteil der Presse 15 zugeführt. In der Presse 15 werden die einzelnen Schichten (Materialbahnen 1, 2, 3, 4 und Kernschicht 24) zu einem fertigen Sandwichbauteil verpresst. Die dargestellte Presse 15 weist an einer oberen Pressplatte 16 und an einer unteren Pressplatte 17 eine Schneidevorrichtung 18 auf. So wird im Zuge des Verpress-Vorgangs das fertiggestellte Sandwichbauteil von den Rohmaterialien (Materialbahnen 1, 2, 3, 4) abgetrennt.

Die zweite Greifeinheit 23 entfernt das fertiggestellte Sandwichbauteil aus der Presse 15.

Fig. 2 zeigt die oben beschriebene Vorrichtung von oben. Gleiche Teile sind mit gleichen Bezugszeichen versehen. Zusätzlich sind in dieser Darstellung noch Zwischenlagerplätze 25 für die Kernschicht(en) 24 dargestellt. Die erste Greifeinheit 22 greift eine Kernschicht 24 von diesen Zwischenlagerplätzen 25 und positioniert diese auf der zweiten Materialbahn 2.

### Bezugszeichenliste

- 1: Erste Materialbahn
- 2: Zweite Materialbahn
- 3: Dritte Materialbahn
- 4: Vierte Materialbahn
- 5: Halterolle(n) der ersten Materialbahn
- 6: Halterolle(n) der zweiten Materialbahn
- 7: Halterolle(n) der dritten Materialbahn
- 8: Halterolle(n) der vierten Materialbahn
- 9: Gestell
- 10: Erste Abwickeleinheit
- 11: Zweite Abwickeleinheit
- 12: Dritte Abwickeleinheit
- 13: Vierte Abwickeleinheit
- 14: Endlos-Montagelinie
- 15: Presse
- 16: Obere Pressplatte
- 17: Untere Pressplatte
- 18: Schneidevorrichtung
- 19: Erste Aufbringeinheit
- 20: Zweite Aufbringeinheit
- 21: Sprühkopf
- 22: Erste Greifeinheit
- 23: Zweite Greifeinheit
- 24: Kernschicht
- 25: Zwischenlagerplätze

## Patentansprüche

1. Verfahren zur Herstellung eines Sandwichbauteils gemäß den folgenden Schritten:
- Bereitstellen mehrerer Materialbahnen (1, 2, 3, 4),
- Aufbringen zumindest eines Matrixmaterials auf die Ober- und/oder Unterseite zumindest einer der Materialbahnen (1, 2, 3, 4), wobei auf zumindest zwei der Materialbahnen (1, 2, 3, 4) in unterschiedlicher Weise Matrixmaterial aufgebracht wird und/oder auf zumindest eine der Materialbahnen (1, 2, 3, 4) entlang deren Ober- und/oder Unterseite in unterschiedlicher Weise Matrixmaterial aufgebracht wird,
- wobei das Aufbringen des Matrixmaterials mittels Sprühauftrag über eine Sprüheinheit erfolgt,
- wobei das Aufbringen von Matrixmaterial in unterschiedlicher Weise durch Aufbringen einer unterschiedlichen Menge von Matrixmaterial erfolgt,
- Anordnen zumindest einer Kernschicht (24) auf einer der Materialbahnen (1, 2, 3, 4), und
- Verpressen der Materialbahnen (1, 2, 3, 4) und der Kernschicht (24) zu dem Sandwichbauteil, wobei die Kernschicht (24) zwischen zumindest zwei der Materialbahnen (1, 2, 3, 4) angeordnet ist.

2. Verfahren zur Herstellung eines Sandwichbauteils nach Anspruch 1,
**dadurch gekennzeichnet, dass** zumindest eine der Materialbahnen (1, 2, 3, 4), bevorzugt zumindest zwei der Materialbahnen (1, 2, 3, 4), Fasermaterial umfassen.

3. Verfahren zur Herstellung eines Sandwichbauteils nach einem der Ansprüche 1 bis 2,
**dadurch gekennzeichnet, dass** zumindest an einer Seite der Kernschicht (24) zumindest zwei der Materialbahnen (1, 2, 3, 4) angeordnet werden, wobei auf diese zwei Materialbahnen (1, 2, 3, 4) in unterschiedlicher Weise Matrixmaterial aufgebracht wird und/oder auf zumindest eine dieser zwei Materialbahnen (1, 2, 3, 4) entlang deren Fläche in unterschiedlicher Weise Matrixmaterial aufgebracht wird.

4. Verfahren zur Herstellung eines Sandwichbauteils nach einem der Ansprüche 1 bis 3,
**dadurch gekennzeichnet, dass** die Kernschicht (24) wabenartig ausgebildet ist.

5. Verfahren zur Herstellung eines Sandwichbauteils nach einem der vorhergehenden Ansprüche,
**dadurch gekennzeichnet, dass** dem Matrixmaterial Fasern beigemischt sind.

6. Verfahren zur Herstellung eines Sandwichbauteils nach einem der vorhergehenden Ansprüche,
**dadurch gekennzeichnet, dass** das Bereitstellen der einzelnen Materialbahnen (1, 2, 3, 4) durch Abwickeln von separaten Halterollen (5, 6, 7, 8) erfolgt.

7. Verfahren zur Herstellung eines Sandwichbauteils nach einem der vorhergehenden Ansprüche,
**dadurch gekennzeichnet, dass** die Materialbahnen (1, 2, 3, 4) mittels zumindest einer Abwickeleinheit (10, 11, 12, 13) von den Halterollen (5, 6, 7, 8) abgewickelt werden.

8. Verfahren zur Herstellung eines Sandwichbauteils nach einem der vorhergehenden Ansprüche,
**dadurch gekennzeichnet, dass** die Sprüheinheit zumindest einen zweiten Sprühkopf (21) aufweist.

9. Verfahren zur Herstellung eines Sandwichbauteils nach einem der vorhergehenden Ansprüche,
**dadurch gekennzeichnet, dass** die Materialbahnen (1, 2, 3, 4) in Bezug auf ihren Anfang horizontal beabstandet und/oder vertikal beabstandet in Richtung einer Presse (15) geführt werden.

10. Verfahren zur Herstellung eines Sandwichbauteils nach Anspruch 9,
**dadurch gekennzeichnet, dass** die Materialbahnen (1, 2, 3, 4) im Wesentlichen horizontal, parallel zueinander und übereinander und/oder im Wesentlichen vertikal nebeneinander in Richtung der Presse (15) geführt werden.

11. Verfahren zur Herstellung eines Sandwichbauteils nach Anspruch 9 oder 10,
**dadurch gekennzeichnet, dass** die parallel übereinander und/oder vertikal nebeneinander geführten Materialbahnen und die Kernschicht (24) mittels der Presse (15), bevorzugt im Nasspressverfahren, zu dem Sandwichbauteil verpresst werden.

12. Verfahren zur Herstellung eines Sandwichbauteils nach einem der Ansprüche 9 bis 11,
**dadurch gekennzeichnet, dass** im Zuge des Verpressens der Materialbahnen (1, 2, 3, 4) und der Kernschicht (24) zu einem Sandwichbauteil zudem eine Abtrennung des Sandwichbauteils von den unverpressten Materialbahnen (1, 2, 3, 4) erfolgt.

13. Vorrichtung zur Durchführung eines Verfahrens nach einem der Ansprüche 1 bis 12, umfassend zumindest eine Abwickeleinheit (10, 11, 12, 13) zum Abwickeln von Materialbahnen (1, 2, 3, 4) von Halterollen (5, 6, 7, 8), zumindest eine Aufbringeinheit (19, 20) zum Aufbringen zumindest eines Matrixmaterials auf die Ober- und/oder Unterseite zumindest einer der Materialbahnen (1, 2, 3, 4), wobei die Aufbringeinheit (19, 20) eine Sprüheinheit ist, wobei auf zumindest zwei der Materialbahnen (1, 2, 3, 4) in unterschiedlicher Weise Matrixmaterial aufgebracht werden kann und/oder auf zumindest eine der Materialbahnen (1, 2, 3, 4) entlang deren Fläche in unterschiedlicher Weise Matrixmaterial aufgebracht werden kann, wobei das Aufbringen von Matrixmaterial in unterschiedlicher Weise durch Aufbringen einer unterschiedlichen Menge von Matrixmaterial erfolgt, zumindest eine erste Greifeinheit (22) zum Anordnen zumindest einer Kernschicht (24) auf zumindest einer der Materialbahnen (1, 2, 3, 4) und zumindest eine Presse (15) zum Verpressen der Materialbahnen (1, 2, 3, 4) und der Kernschicht (24) zu dem Sandwichbauteil.

14. Vorrichtung nach Anspruch 13,
**dadurch gekennzeichnet, dass** die Presse (15) im Bereich einer oberen Pressplatte (16) und/oder im Bereich einer unteren Pressplatte (17) eine Schneidevorrichtung (18) aufweist.

15. Vorrichtung nach Anspruch 13 oder 14,
**dadurch gekennzeichnet, dass** mittels mehrerer Führungen die Materialbahnen (1, 2, 3, 4) im Wesentlichen horizontal, parallel zueinander und übereinander und/oder vertikal nebeneinander geführt sind.

16. Vorrichtung nach einem der Ansprüche 13 bis 15,
**dadurch gekennzeichnet, dass** die Halterollen der Materialbahnen (5, 6, 7, 8) voneinander horizontal und/oder vertikal beabstandet angeordnet sind.

17. Vorrichtung nach einem der Ansprüche 13 bis 16,
**dadurch gekennzeichnet, dass** die Abwickeleinheit (10, 11, 12, 13) so ausgebildet ist, dass zumindest an einer Seite der Kernschicht (24) zumindest zwei Materialbahnen (1, 2, 3, 4) angeordnet werden können, wobei durch die Aufbringeinheit (19, 20) auf diese zwei Materialbahnen (1, 2, 3, 4) in unterschiedlicher Weise Matrixmaterial aufgebracht werden kann und/oder auf zumindest eine dieser zwei Materialbahnen (1, 2, 3, 4) entlang deren Fläche in unterschiedlicher Weise Matrixmaterial aufgebracht werden kann.

18. Vorrichtung nach einem der Ansprüche 13 bis 17,
**dadurch gekennzeichnet, dass** die Sprüheinheit zumindest einen zweiten Sprühkopf (21) aufweist, wobei der zweite Sprühkopf (21) vorzugsweise Matrixmaterial in unterschiedlicher Weise durch Aufbringen einer unterschiedlichen Menge und/oder unterschiedlichen Art von Matrixmaterial aufbringen kann.
